# EUROPÄISCHE PATENTSCHRIFT

(11) **EP 1 738 080 B1**
(45) Veröffentlichungstag und Bekanntmachung des Hinweises auf die Patenterteilung: **04.11.2009**
(21) Anmeldenummer: 05741854.3
(22) Anmeldetag: 09.04.2005
(51) Int. Cl.: F15B 1/033, F16H 61/00, B60T 1/10, B62D 5/065

(54) **VERFAHREN ZUR STEUERUNG EINER DRUCKMITTELPUMPE IN EINEM KRAFTFAHRZEUG**
METHOD FOR CONTROLLING AN AUTOMOTIVE HYDRAULIC PUMP
PROCEDE DE COMMANDE D'UNE POMPE HAUTE PRESSION DANS UN VEHICULE AUTOMOBILE

(30) Priorität: 22.04.2004 DE 102004019511
(43) Veröffentlichungstag der Anmeldung: 03.01.2007
(73) Patentinhaber: ZF Friedrichshafen AG, 88038 Friedrichshafen (DE)
(72) Erfinder: SCHNEIDER, Florian, 88161 Lindenberg (DE); JÄGER, Thomas, 88074 Meckenbeuren (DE); GANSOHR, Marcus, 88682 Salem (DE)
(86) Internationale Anmeldenummer: PCT/EP2005/003748
(87) Internationale Veröffentlichungsnummer: WO 2005/103502

(56) Entgegenhaltungen:
- EP-A- 0 305 950
- EP-A- 0 469 615
- EP-A- 1 072 491
- WO-A-95/09740
- WO-A-03/031244
- DE-A1- 19 830 089
- US-A- 4 402 554
- PATENT ABSTRACTS OF JAPAN Bd. 1997, Nr. 05, 30. Mai 1997 (1997-05-30) & JP 09 002096 A (MITSUBISHI MOTORS CORP), 7. Januar 1997 (1997-01-07)

## Beschreibung

Die Erfindung betrifft ein Verfahren zur Steuerung einer Druckmittelpumpe in einem Kraftfahrzeug gemäß dem Oberbegriff des Patentanspruchs 1.

In Kraftfahrzeugen werden zunehmend druckmittelbetätigbare Aktuatoren genutzt, mit deren Hilfe der Betrieb eines solchen Fahrzeugs sicherer und leichter ist. Derart hilfskraftunterstützte Fahrzeugsysteme sind beispielsweise Lenkhilfeeinrichtungen, Bremskraftverstärker und Kupplungsbetätigungsvorrichtung. Zum Betreiben dieser etwa als Kolben-Zylinder-Anordnungen ausgebildeten Aktuatoren wird ein Druckmittel benötigt, welches ein Gas oder eine Hydraulikflüssigkeit sein kann. Dieses Druckmittel wird von einer mechanisch oder elektrisch antreibbaren Druckmittelpumpe beim Betrieb des Fahrzeuges auf einen solchen Betriebsdruck gebracht, der sicher ausreicht, um die notwenigen Aktuatorkräfte zu erzeugen.

Um den Kraftstoffverbrauch eines derart ausgestatteten Fahrzeuges durch den Betrieb der Druckmittelpumpe so wenig wie möglich negativ zu beeinflussen, ist es bekannt, mit der Druckmittelpumpe das Druckmittel in einem Druckspeicher auf einen ausreichend hohen Betätigungsdruck zu bringen. Da die Nutzung des Druckmitteldrucks in den betroffenen Aktuatoren in der Regel diskontinuierlich erfolgt, wird die Druckmittelpumpe mit bekannten Steuerungsvorrichtungen und/oder Steuerungsverfahren nur dann aktiviert, wenn der Druck im Druckspeicher auf einen vorbestimmten unteren Druckgrenzwert abgefallen ist. Dieser untere Druckgrenzwert liegt noch oberhalb des notwenigen Betätigungsdrucks für die genannten Aktuatoren, so dass deren Betrieb auch während einer solchen Druckladephase sichergestellt ist. Die Druckmittelpumpe wird dann abgeschaltet, wenn ein vordefinierter oberer Druckgrenzwert erreicht ist. Eine diesbezüglich ausgelegte Hydraulikdruckanlage ist beispielsweise aus der DE 198 30 089 A1 bekannt.

Aus der EP 0 469 615 A ist schließlich ein Verfahren zur Steuerung einer Druckmittelpumpe in einem Kraftfahrzeug bekannt, bei dem die Druckmittelpumpe zur Erhöhung des Drucks in einem zugeordneten Druckspeicher aktiviert wird, wenn ein vorbestimmter unterer Druckgrenzwert unterschritten wird, und bei dem dieselbe abgeschaltet wird, wenn ein vorbestimmter oberer Druckgrenzwert überschritten wird, wobei bei einem Abfall des Druckmitteldrucks im Druckspeicher die Druckmittelpumpe bei verschiedenen Geschwindigkeiten des Fahrzeugs bei unterschiedlichen unteren Druckgrenzwerten aktiviert wird.

Im fortdauernden Bestreben zur Verbesserung von Kraftfahrzeugen liegt der Erfindung die Aufgabe zugrunde, ein Verfahren zur Steuerung des Betriebs einer Druckmittelpumpe im einem gattungsgemäßen Drucksystem vorzuschlagen, mit dem sich der Kraftstoffverbrauch eines mit hilfskraftbetätigbaren Aktuatoren ausgestatteten Fahrzeugs beeinflussen und weiter reduzieren lässt.

Die Lösung dieser Aufgabe ergibt sich aus den Merkmalen des Hauptanspruchs, während vorteilhafte Weiterbildungen und Ausgestaltungen des erfindungsgemäßen Verfahrens den Unteransprüchen entnehmbar sind.

Der Erfindung liegt die Erkenntnis zugrunde, dass sich der Energieaufwand zum Betreiben der Druckmittelpumpe kraftstoffsparend dann bereitstellen lässt, wenn sich das Fahrzeug im Schubbetrieb oder Bremsbetrieb befindet. In diesen Betriebsphasen geht es darum, die kinetische Energie des Fahrzeugs zu verringern, welches hauptsächlich durch Reibungsverluste im Antriebsstrang und/oder an den Fahrzeugbetriebsbremsen erfolgt. Sofern die Druckmittelpumpe in diesen Betriebsphasen aktiviert wird, wandelt diese kraftstoffsparend kinetische Energie nutzbringend in einen Druckanstieg des Druckmittels um.

Die Erfindung betrifft daher ein Verfahren zur Steuerung einer Druckmittelpumpe in einem Kraftfahrzeug, bei dem die Druckmittelpumpe zur Erhöhung des Drucks in einem zugeordneten Druckspeicher aktiviert wird, wenn ein vorbestimmter unterer Druckgrenzwert unterschritten wird, und bei dem dieselbe abgeschaltet wird, wenn ein vorbestimmter oberer Druckgrenzwert überschritten wird. Es ist vorgesehen, dass bei einem Abfall des Druckmitteldrucks im Druckspeicher die Druckmittelpumpe während unterschiedlicher Betriebsphasen des Fahrzeugs bei verschiedenen unteren Druckgrenzwerten aktiviert wird.

Damit das Druckmittel in dem Druckspeicher nach der Inbetriebnahme des Fahrzeugs etwa nach einer längeren Deaktivierungsphase einen für die Aktuatorbetätigung ausreichend hohen Druck aufweist, ist gemäß des erfindungsgemäßen Verfahrens vorgesehen, dass die Druckmittelpumpe in der ersten Betriebsphase unmittelbar nach dem Start des Fahrzeugs solange aktiviert wird, bis der vorbestimmte obere Druckgrenzwert erreicht ist.

Erfindungsgemäß wird die Druckmittelpumpe beim Unterschreiten eines anderen vorbestimmten unteren Druckgrenzwertes eingeschaltet, wobei dieser untere Druckgrenzwert kleiner ist als der untere Druckgrenzwert für den Schub- und/oder Bremsbetrieb.

Durch diese Verfahrensweise kann kraftstoffsparend erreicht werden, dass die Druckmittelpumpe im Brems- und/oder Schubbetrieb des Fahrzeugs vergleichsweise häufiger aktiviert wird als im Zugbetrieb, Diese Brems- und Schubbetriebsphasen sind üblicherweise zwar zeitlich kurz bemessen, jedoch treten diese beispielsweise im Stadtverkehr oder beim Betrieb des Fahrzeugs auf Landstraßen verhältnismäßig häufig auf. Dadurch ergeben sich aufsummiert recht lange Zeiträume, in denen die Druckmittelpumpe aktiv ist und so den Druckmitteldruck auf einem vergleichsweise hohen Niveau hält. Von besonderem Vorteil ist nun, dass diese Druckladevorgänge in Betriebsphasen erfolgen, in denen keine an sich für den Vortrieb nutzbare Antriebsenergie aufgewandt werden muss, sondern solche Energie verwendet wird, die zum Abbau der Fahrzeuggeschwindigkeit eingesetzt wird.

Sofern der notwenige Druckmitteldruck in dem Druckspeicher zur Verfügung steht, wird die Druckmittelpumpe bevorzugt nur in solchen Betriebsphasen aktiviert, in denen vom Antriebsmotor des Fahrzeugs keine Energie für den Fahrzeugvortrieb erzeugt wird. Vorzugsweise wird daher der Betrieb der Druckmittelpumpe in Abhängigkeit vom Druck im Druckspeicher sowie von der Fahrpedalstellung gesteuert.

Schließlich kann vorgesehen sein, dass bei geöffneter Kupplung zwischen Antriebsmotor und Getriebe im Leerlauf des Antriebsmotors die Druckmittelpumpe dann aktviert wird, wenn der kleinere der beiden unteren Druckgrenzwerte unterschritten wird. Im Rahmen der Erfindung kann auch vorgesehen sein, dass für den genannten Leerlaufbetrieb ein dritter unterer Druckgrenzwert genutzt wird, der beispielsweise unter dem Druckgrenzwert für den Zugbetrieb liegt.

Auf diese Weise wird sichergestellt, dass auch bei Stillstand des Fahrzeugs mit laufendem Antriebsmotor immer ein ausreichend hoher Druck im Druckspeicher vorhanden ist, wobei dieser nicht wie in der Schubbetriebs- und/oder Bremsphase unnötig auf einem vergleichsweise hohen Druckniveau gehalten wird. Dieser Druckladebetrieb während des Motorleerlaufs führt gegenüber bekannten Steuerungsverfahren zwar nur zu einer kleinen Kraftstoffeinsparung, es ist aber bisher nicht bekannt geworden, die Druckmittelpumpe im Leerlaufbetrieb des Motors dann einzuschalten, wenn der kleinere von mehreren unteren Druckgrenzwerten unterschritten wird.

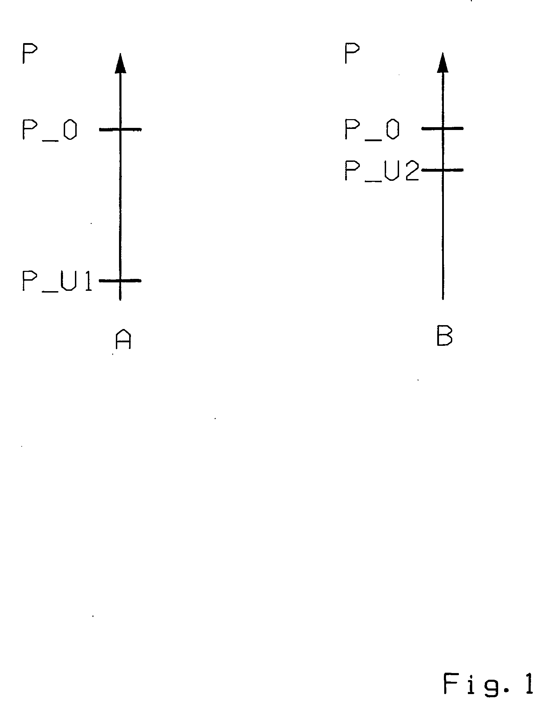

Die Erfindung lässt sich anhand der beigefügten Zeichnung weiter erläutern. In dieser ist auf der linken Zeichnungsseite in einer Skala A der Druck des Druckmittels im Druckspeicher für Zugbetriebs- und Leerlaufphasen dargestellt. Der Druck des Druckmittels wird während solcher Phasen durch Aktivieren der Druckmittelpumpe bis zu einem oberen Druckgrenzwert P_O angehoben und dieselbe dann abgeschaltet.

Durch den Betrieb der an diesen Druckspeicher über steuerbare Ventile angeschossene Aktuatoren vermindert sich der Druck im Druckspeicher. Sobald der Druck einen vorbestimmten unteren Druckgrenzwert P_U1 unterschritten hat, wird im Zugbetrieb des Fahrzeugs die Druckmittelpumpe erneut aktiviert, so dass diese den Druck erneut bis zu dem Wert P_O anhebt.

Diese Betriebsweise gilt wie erwähnt im übrigen auch für eine Stillstandsphase des Fahrzeugs mit einem im Leerlauf betriebenem Antriebsmotor und geöffneter Kupplung zwischen dem Antriebsmotor und dem Getriebe. Auf diese Weise ist auch bei der ersten Inbetriebnahme des Fahrzeugs nach einem längeren Stillstand sichergestellt, dass sofort nach dem Anlassen des Antriebsmotors der Druck in dem Druckspeicher auf den Wert P_O angehoben wird und nicht auf Dauer unter den unteren Druckgrenzwert P_U1 abfällt.

Wie die rechte Zeichnungsseite anhand der Skala B für den Druck des Druckmittels in dem Druckspeicher verdeutlicht, bildet auch in Brems- und/oder Schubbetriebsphasen der obere Druckgrenzwert P_O den Maximalwert des Drucks im Druckspeicher. Abweichend von der Skala A ist aber erkennbar, dass der untere Druckgrenzwert P_U2 sehr viel dichter an diesem oberen Druckgrenzwert P_O liegt. Dies hat zur Folge, dass während Brems- und/oder Schubphasen des Fahrzeugs die Druckmittelpumpe sehr viel frührer eingeschaltet wird als während einer Zugbetriebsphase.

Dadurch wird immer dann, wenn ein Brems- und/oder Schubbetrieb von einem Steuergerät für die Druckmittelpumpe festgestellt wird, der untere Druckgrenzwert von dem Wert P_U1 auf den Wert P_U2 umgeschaltet. In dessen Folge wird die Druckmittelpumpe schon bei einem vergleichsweise kleinen Abfall des Druckmitteldrucks aktiviert und so der Druck in dem Druckspeicher auf einem relativ hohen Niveau gehalten.

Von Vorteil bei dieser Steuerung der Druckmittelpumpe ist, dass auch sehr kurzdauernde Brems- und/oder Schubbetriebsphasen zur Erhöhung des Drucks in dem Druckspeicher genutzt werden. Diese Druckerhöhungsvorgänge erfolgen zudem kraftstoffsparend in Betriebsphasen, in denen keine Antriebsenergie des Antriebsmotors für den Fahrzeugvortrieb benötigt wird. Vielmehr wird die Antriebsenergie für den Druckladevorgang derjenigen kinetischen Energie des Fahrzeugs entnommen, die ansonsten durch Reibarbeit an den Fahrzeugbremsen und/oder im Antriebsstrang in Wärme umgesetzt würde.

### Bezugszeichen

- A: Druckskala für den Druck im Druckmittelspeicher für den Zugbetrieb
- B: Druckskala für den Druck im Druckmittelspeicher für den Schubbetrieb
- P_O: oberer Druckgrenzwert
- P_U1: unterer Druckgrenzwert für Zugbetrieb und Leerlauf
- P_U2: unterer Druckgrenzwert für Schubbetrieb und Bremsbetrieb

## Patentansprüche

1. Verfahren zur Steuerung einer Druckmittelpumpe in einem Kraftfahrzeug, bei dem die Druckmittelpumpe zur Erhöhung des Drucks in einem zugeordneten Druckspeicher aktiviert wird, wenn ein vorbestimmter unterer Druckgrenzwert unterschritten wird, und bei dem dieselbe abgeschaltet wird, wenn ein vorbestimmter oberer Druckgrenzwert (P_O) überschritten wird, wobei bei einem Abfall des Druckmitteldrucks im Druckspeicher die Druckmittelpumpe während unterschiedlicher Betriebsphasen des Fahrzeugs bei unterschiedlichen unteren Druckgrenzwerten (P_U1, P_U2) aktiviert wird, **dadurch gekennzeichnet, dass** die Druckmittelpumpe in einer ersten Betriebsphase unmittelbar nach dem Start des Fahrzeugs solange aktiviert wird, bis der obere Druckgrenzwert (P_O) erreicht ist, und dass der untere Druckgrenzwert (P_U2) der Druckmittelpumpe für die Betriebsphase Schubbetrieb und/ oder Bremsbetrieb größer ist als der untere Druckgrenzwert (P_U1) für die Betriebsphase Zugbetrieb.

2. Verfahren nach Anspruch 1, **dadurch gekennzeichnet, dass** die Druckmittelpumpe in Betriebsphasen aktiviert wird, in denen vom Antriebsmotor des Fahrzeugs keine Energie für den Vortrieb des Fahrzeuges erzeugt wird.

3. Verfahren nach Anspruch 2, **dadurch gekennzeichnet, dass** die Druckmittelpumpe in Betriebsphasen aktiviert wird, in denen vom Antriebsmotor des Fahrzeugs keine Energie für den Vortrieb des Fahrzeuges erzeugt wird und eine Kupplung zwischen dem Antriebsmotor und einem Getriebe geöffnet ist.

4. Verfahren nach wenigstens einem der vorherigen Ansprüche, **dadurch gekennzeichnet, dass** bei geöffneter Kupplung und Leerlauf des Antriebsmotors die Druckmittelpumpe aktviert wird, wenn der kleinere von mehreren unteren Druckgrenzwerten (P_U1, P_U2) unterschritten wird.

## Claims

1. Method for controlling a pressure-medium pump in a motor vehicle, in which the pressure-medium pump is activated in order to increase the pressure in an assigned pressure accumulator when a predetermined lower pressure limit value is undershot and in which motor vehicle, said pressure-medium pump is switched off when a predetermined upper pressure limit value (P_O) is overshot, where, in the event of a drop in the pressure-medium pressure in the pressure accumulator, the pressure-medium pump is activated at different lower pressure limit values (P_U1, P_U2) during different operating phases of the vehicle, **characterized in that**, in a first operating phase immediately after the start of the vehicle, the pressure-medium pump is activated until the upper pressure limit value (P_O) is reached, and **in that** the lower pressure limit value (P_U2) of the pressure-medium pump for the overrun and/or braking operating phase is higher than the lower pressure limit value (P_U1) for the traction operating phase.

2. Method according to Claim 1, **characterized in that** the pressure-medium pump is activated in operating phases in which no energy for the propulsion of the vehicle is generated by the vehicle engine.

3. Method according to Claim 2, **characterized in that** the pressure-medium pump is activated in operating phases in which no energy for the propulsion of the vehicle is generated by the vehicle engine and a clutch between the engine and a transmission is opened.

4. Method according to at least one of the preceding claims, **characterized in that**, with the clutch open and with the engine idling, the pressure-medium pump is activated when the smaller of a plurality of lower pressure limit values (P_U1, P_U2) is undershot.

## Revendications

1. Procédé de commande d'une pompe de fluide sous pression dans un véhicule automobile, dans lequel la pompe de fluide sous pression est activée pour augmenter la pression dans un accumulateur de pression associé, si l'on passe en dessous d'une valeur limite de pression inférieure prédéterminée, et dans lequel elle est coupée lorsqu'une valeur limite de pression supérieure prédéterminée (P_O) est dépassée, la pompe de fluide sous pression étant activée, en cas de chute de la pression du fluide sous pression, pendant différentes phases de fonctionnement du véhicule pour différentes valeurs limite de pression inférieures (P_U1, P_U2), **caractérisé en ce que** la pompe de fluide sous pression est activée dans une première phase de fonctionnement immédiatement après le démarrage du véhicule jusqu'à ce que l'on atteigne la valeur limite de pression supérieure (P_O), et **en ce que** la valeur limite de pression inférieure (P_U2) de la pompe de fluide sous pression pour la phase de fonctionnement en mode de poussée et/ou en mode de freinage est supérieure à la valeur limite de pression inférieure (P_U1) pour la phase de fonctionnement en mode de traction.

2. Procédé selon la revendication 1, **caractérisé en ce que** la pompe de fluide sous pression est activée dans des phases de fonctionnement dans lesquelles aucune énergie n'est produite par le moteur d'entraînement du véhicule pour la propulsion du véhicule.

3. Procédé selon la revendication 2, **caractérisé en ce que** la pompe de fluide sous pression est activée dans des phases de fonctionnement dans lesquelles aucune énergie n'est produite par le moteur d'entraînement du véhicule pour la propulsion du véhicule et un embrayage entre le moteur d'entraînement et une boîte de vitesses est ouvert.

4. Procédé selon au moins l'une quelconque des revendications précédentes, **caractérisé en ce que** lorsque l'embrayage est ouvert et en marche au ralenti du moteur d'entraînement, la pompe de fluide sous pression est activée lorsque l'on passe en dessous de la plus petite de plusieurs valeurs limite de pression inférieures (P_U1, P_U2).
